(19) Europäisches Patentamt
European Patent Office
Office européen des brevets

(11) **EP 3 699 642 B1**

(12) **EUROPEAN PATENT SPECIFICATION**

(45) Date of publication and mention
of the grant of the patent:
**26.03.2025 Bulletin 2025/13**

(21) Application number: **18868537.4**

(22) Date of filing: **10.08.2018**

(51) International Patent Classification (IPC):
**G01S 5/02** *(2010.01)*      **G01S 19/40** *(2010.01)*

(52) Cooperative Patent Classification (CPC):
**G01S 5/0257; G01S 19/40**

(86) International application number:
**PCT/CN2018/100031**

(87) International publication number:
**WO 2019/076119 (25.04.2019 Gazette 2019/17)**

(54) **VEHICLE POSITIONING METHOD AND APPARATUS**

VERFAHREN UND VORRICHTUNG ZUR FAHRZEUGPOSITIONIERUNG

PROCÉDÉ ET APPAREIL DE POSITIONNEMENT DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.10.2017 CN 201710985393**

(43) Date of publication of application:
**26.08.2020 Bulletin 2020/35**

(73) Proprietor: **NIO (Anhui) Holding Co., Ltd.
Hefei City, Anhui Province (CN)**

(72) Inventor: **ZHANG, Xiaodong
Anting, Jiading, Shanghai (CN)**

(74) Representative: **Vossius & Partner
Patentanwälte Rechtsanwälte mbB
Siebertstrasse 3
81675 München (DE)**

(56) References cited:
**WO-A1-2016/001768      CN-A- 1 836 250
CN-A- 1 852 580      CN-A- 101 622 514
CN-A- 101 887 127      CN-A- 103 837 153
JP-A- 2005 250 853      JP-A- 2017 141 010
US-A1- 2010 141 432**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Processed by Luminess, 75001 PARIS (FR)

## Description

### Field of the Invention

The present invention relates to the technical field of vehicle positioning, in particular to a vehicle positioning method and device.

### Background of the Invention

With the rise of Internet vehicles, a variety of novel vehicle services have emerged. After a user requests for vehicle positioning service, the vehicle of the user needs to be locate and found accurately and quickly. In traditional GPS (Global Positioning System), BDS (BeiDou Navigation Satellite System) and other positioning manners, the current position coordinates of the vehicle are usually used to locate the vehicle.

However, for areas with complicated road conditions, there will still be a certain vehicle location error only through the current position coordinate information, and the positioning accuracy is low. For example: if the current GPS location of the vehicle is on the adjacent boundary of two adjacent areas, it is impossible to confirm the vehicle is in which area.

US 2010/0141432 A1 discloses correcting and/or improving an estimated location of a tracked object. A zone location of the tracked object may be refined by (a) accepting first location information derived from a first location technology, (b) generating a set of at least two candidate location zones using the first location, topology information and an accuracy range for the first location technology, (c) for each of the at least two candidate location zones, (1) establishing a path from a previous location zone to the given candidate location zone, and (2) storing, by the computer system and in association with the candidate zone, any location zones on the path, and (d) applying at least one of (A) path-based candidate location zone elimination to each of the at least two candidate location zones, and (B) object-physics-based candidate location zone elimination to each of the at least two candidate location zones, to generate a refined set of at least one candidate location zone.

### Summary of the Invention

The technical problem to be solved by the present invention is to provide a vehicle positioning method and device, in order to obtain accurate vehicle location information through the historical driving trajectory information and the current coordinate information of a vehicle. The present invention is simple and easy to implement and has high positioning accuracy.

In order to solve the above technical problem, the present invention provides a vehicle positioning method, including the following steps:

obtaining current location coordinates of a vehicle, and selecting candidate areas within a preset distance according to the current location coordinates of the vehicle;

obtaining historical location coordinates of the vehicle within a preset time, and selecting a first candidate area from the candidate areas according to the historical location coordinates of the vehicle; and

judging whether the vehicle enters the first candidate area to determine the current location of the vehicle, wherein judging whether the vehicle enters the first candidate area includes the following steps:

obtaining a vector in a direction entering the first candidate area at the entrance of the first candidate area to serve as a first vector;

obtaining a driving vector of the vehicle at the entrance of the first candidate area to serve as a second vector, comprising obtaining a coordinate point at which the vehicle passes through the entrance of the first candidate area within the preset time to serve as the starting point of the second vector; and starting from the starting point of the second vector, selecting the next driving trajectory point in the historical trajectory of the vehicle to serve as the end point of the second vector, so as to obtain the second vector; and

calculating an included angle between the first vector and the second vector, and judging whether the vehicle enters the first candidate area according to the included angle.

Further, the selecting a first candidate area from the candidate areas according to the historical location coordinates of the vehicle includes the following steps:

obtaining the location coordinates of the entrances of the candidate areas;

comparing the historical location coordinates of the vehicle with the location coordinates of the entrances of the candidate areas in a reverse chronological manner; and

selecting the candidate area corresponding to the entrance of the candidate area that the vehicle passes through most recently as the first candidate area according to the comparison result.

Further, if there are more than two entrances of the candidate areas that the vehicle pass through most recently, the following step is performed to select the first candidate area:

calculating the distances between three coordinate points, that is, when the vehicle passes the entrance of the candidate area, a previous time point and a subsequent time point, and the entrance of each candidate area that the vehicle passes through most recently, comparing the distances, and selecting the candidate area with the minimum distance as the first candidate area.

Further, the obtaining a vector in a direction entering the first candidate area at the entrance of the first candidate area to serve as a first vector includes the following steps:

selecting a point at the entrance of the first candidate area to serve as a starting point of the first vector; and selecting a point on a ray in the direction entering the first candidate area to serve as an end point of the first vector, so as to obtain the first vector.

Further, the calculating an included angle between the first vector and the second vector, and judging whether the vehicle enters the first candidate area according to the included angle includes the following steps:

setting the first vector as (x1, y1), setting the second vector as (x2, y2), setting the included angle between the first vector and the second vector as θ, and calculating θ by the following formula:

$$\cos\theta = \frac{x1x2 + y1y2}{\sqrt{x1^2 + y1^2} + \sqrt{x2^2 + y2^2}}$$

if 0° ≤ θ < 90°, judging that the vehicle enters the first candidate area, and that the current location of the vehicle is the first candidate area; and

if 90° ≤ θ ≤ 180°, judging that the vehicle does not enter the first candidate area, and that the current location of the vehicle is not in the candidate area within the selected preset distance.

According to another aspect of the present invention, a vehicle positioning device is provided, including:

a first area selection module, configured to obtain current location coordinates of a vehicle, and select candidate areas within a preset distance according to the current location coordinates of the vehicle; a second area selection module, configured to obtain historical location coordinates of the vehicle within a preset time, and select a first candidate area from the candidate areas according to the historical location coordinates of the vehicle; and a judging module, configured to judge whether the vehicle enters the first candidate area to determine the current location of the vehicle, wherein the judging module includes:

a first vector obtaining unit, configured to obtain a vector in a direction entering the first candidate area at the entrance of the first candidate area to serve as a first vector;

a second vector obtaining unit, configured to obtain a driving vector of the vehicle at the entrance of the first candidate area to serve as a second vector, wherein the second vector obtaining unit is further configured to: obtain a coordinate point at which the vehicle passes through the entrance of the first candidate area within the preset time to serve as the starting point of the second vector; and starting from the starting point of the second vector, select the next driving trajectory point in the historical trajectory of the vehicle to serve as the end point of the second vector, so as to obtain the second vector; and a judging unit, configured to calculate an included angle between the first vector and the second vector, and judge whether the vehicle enters the first candidate area according to the included angle.

Further, the second area selection module includes:

a first coordinate obtaining unit, configured to obtain the location coordinates of the entrances of the candidate areas; a coordinate comparison unit, configured to compare the historical location coordinates of the vehicle with the location coordinates of the entrances of the candidate areas in a reverse chronological manner; and a first candidate area selection unit, configured to select the candidate area corresponding to the entrance of the candidate area that the vehicle passes through most recently as the first candidate area according to the comparison result.

Further, if there are more than two entrances of the candidate areas that the vehicle pass through most recently, the first candidate area selection unit is further configured to:
calculate the distances between three coordinate points, that is, when the vehicle passes through the entrance of the candidate area, a previous time point and a subsequent time point, and the entrance of each candidate area that the vehicle passes through most recently, compare the distances, and select the candidate area with the minimum distance as the first candidate area.

Further, the first vector obtaining unit is further configured to:

select a point at the entrance of the first candidate area to serve as a starting point of the first vector; and select a point on a ray in the direction entering the first candidate area to serve as an end point of the first vector, so as to obtain the first vector.

Further, the judging unit includes:

a calculation sub-unit, configured to calculate the included angle θ between the first vector and the second vector,

set the first vector as (x1, y1), set the second vector as (x2, y2), set the included angle between the first vector and the second vector as θ, and specifically calculate θ by the following formula:

$$\cos\theta = \frac{x1x2 + y1y2}{\sqrt{x1^2 + y1^2} + \sqrt{x2^2 + y2^2}}$$

a judging sub-unit, configured to judge whether the vehicle enters the first candidate area according to the included angle, specifically:

if 0° ≤ θ < 90°, judge that the vehicle enters the first candidate area, and that the current location of the vehicle is the first candidate area; and

if 90° ≤ θ ≤ 180°, judge that the vehicle does not enter the first candidate area, and that the current location of the vehicle is not in the candidate area within the selected preset distance.

According to yet another aspect of the present invention, a controller is provided, including a memory and a processor, wherein the memory stores a computer program, and the program is configured to implement the steps of the method when executed by the processor.

Compared with the prior art, the present invention has obvious advantages and beneficial effects. By means of the above technical solutions, the vehicle positioning method and device of the present invention can achieve considerable technological advancement and practicality, have wide industrial utilization values, and at least have the following advantages:

(1) the present invention obtains accurate vehicle location information through the historical driving trajectory information and the current coordinate information of the vehicle to identify the specific location where the vehicle is located more accurately;

(2) in the case of adjacent POIs (Point of Information, Point of Information), the present invention can more accurately judge the POI information to which the vehicle belongs compared with the manner in the prior art that the POI information of the vehicle is judged by directly using the current location coordinate data, without being disturbed by multiple adjacent POIs and other information, the problem that the POI boundary is difficult to judge is solved, and the positioning accuracy is high; and

(3) the present invention judges the location of the vehicle by calculating the included angle between the vectors in the driving direction of the vehicle and the direction entering the first candidate area, the calculation amount is relatively small, and the result can be quickly calculated and inferred, the calculation mode is simple, convenient and feasible, and the efficiency is high.

The above description is only an overview of the technical solutions of the present invention. In order understand the technical means of the present invention more clearly, the present invention can be implemented in accordance with the contents of the specification, and in order to make the above and other objects, features and advantages of the present invention more obvious and understandable, preferred embodiments are listed below and are described in detail below in combination with drawings.

**Brief Description of the Drawings**

Fig. 1 is a flow diagram of a vehicle positioning method provided by an embodiment of the present invention;

Fig. 2 is a schematic diagram of a vehicle coordinate location for vehicle positioning provided by an embodiment of the present invention;

Fig. 3 is a schematic diagram of an included angle between a vehicle driving trajectory vector and a vector of entering a candidate area provided by an embodiment of the present invention;

Fig. 4 is a schematic diagram of a vehicle positioning device provided by an embodiment of the present invention.

**Detailed Description of the Embodiments**

In order to further illustrate the technical means and effects adopted in the present invention to achieve the intended purpose of the invention, specific embodiments and effects of a vehicle positioning method and system proposed in accordance with the present invention are described in detail below, in conjunction with the drawings and preferred embodiments.

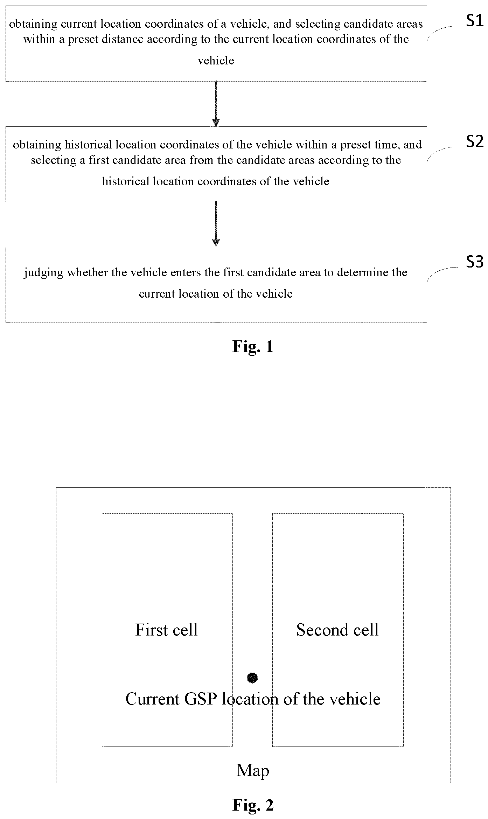

As shown in Fig. 1, the present invention provides a vehicle positioning method. The following embodiments are described based on a GPS system. The method includes the following steps:

S1. Obtaining current location coordinates of a vehicle, and selecting candidate areas within a preset distance according to the current location coordinates of the vehicle; and the preset distance can be set according to the traffic conditions, the geographic environment and other information of the area where the vehicle is located.

S2. Obtaining historical GPS coordinates of the vehicle within a preset time, and selecting a first candidate area from the candidate areas according to the historical GPS coordinates of the vehicle; and the preset time can be set according to specific traffic conditions, the geographic environment, the average driving speed of the vehicle in the candidate areas and other information.

S3. Judging whether the vehicle enters the first candidate area to determine the current location of the vehicle. If the vehicle enters the first candidate area, the vehicle is currently in the first candidate area, if the vehicle does not enter the first candidate area, the vehicle is not in the first candidate area, the location of the vehicle is obtained again, the preset distance value and the preset time value are adjusted, and the steps S1-S3 are repeated to perform location judgment, until the current location of the vehicle is determined.

It should be noted that, the GPS coordinates described in the embodiment of the present invention are not limited thereto and depend on the positioning system used. For example, if BDS is used for positioning, the location coordinates should be BDS coordinates.

The problem of unclear location of the vehicle is descried in the following embodiments in specific scenarios:

As shown in Fig. 2, in the case of two adjacent cells, the two cells are respectively set as a first cell and a second cell, the current coordinate location submitted by the vehicle appears on an adjacent side of the two cells after being drawn on the map, and at this time, the POI information of the vehicle is difficult to judge. In this case, the location of the vehicle has the following two possibilities:

1. Located in the first cell; and
2. Located in the second cell.

For this kind of scenario, the historical trajectory of the vehicle is obtained via the characteristic that the vehicle periodically uploads the currently located GPS location during the driving process, so as to judge the accurate location of the vehicle.

In this scenario, in the step S1, the first cell and the second cell are the candidate areas within the preset distance.

Then, step S2 is executed: selecting the preset time, wherein the preset time can be selected as 1 hour in this scenario, obtaining the historical GPS coordinates of the vehicle within 1 hour, and selecting the first candidate area from the first cell and the second cell according to the historical GPS coordinates of the vehicle, which specifically includes the following steps:

S201. Obtaining the GPS coordinates of all entrances of the first cell and the second cell;
S202. Comparing the historical GPS coordinates of the vehicle with the GPS coordinates of all entrances of the first cell and the second cell in a reverse chronological manner; and
S203. Selecting the cell corresponding to the entrance of the candidate area that the vehicle passes through most recently as the first candidate area according to the comparison result.

Specifically, assuming that in the step S201, the first cell has two entrances, and the corresponding GPS coordinates are: (1, 1) and (1,2); the second cell has one entrance, and the corresponding GPS coordinates are (2, 1). It should be noted that the scenario is only used as a specific embodiment to illustrate the present invention, the number of the candidate areas is not limited to two, but can also be multiple, and similarly, the number of the entrances of the candidate areas is not unique, which is analyzed according to the specific scenario.

By searching for the historical driving trajectory of the vehicle, it can be seen that the vehicle passes through (2, 1) half an hour ago, passes through (1, 1) one hour ago, and does not pass through the coordinates of the entrances of other cells thereafter. Then, it can be seen that the entrance point of the cell that the vehicle passes through most recently is (2, 1), and then, the second cell is selected as the first candidate area.

There may also be a special situation in this scenario: if the distance between the entrances of the first cell and the second cell is very small, and the coordinate point of the entrance of the cell that the vehicle passes through most recently is just located between the entrance of the first cell and the entrance of the second cell, then the following judgement needs to be further performed:

calculating the distances between three coordinate points, that is, when the vehicle passes the space between the entrance of the first cell and the entrance of the second cell, a previous time point and a subsequent time point, with the entrance of the first cell and the entrance of the second cell, comparing the distances, and selecting the cell with the minimum distance as the first candidate area.

After the first candidate area is determined, operations corresponding to the step S3 are performed: the judging whether the vehicle enters the second cell includes the following steps:

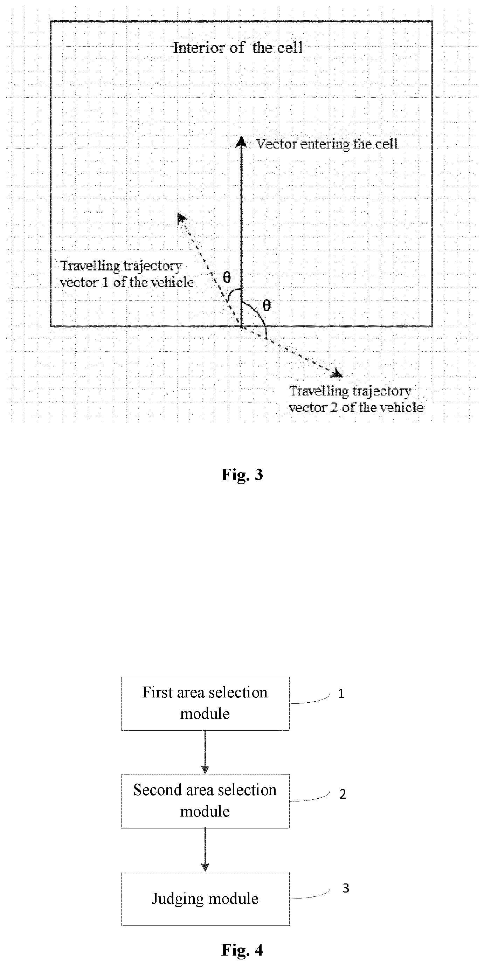

S301. Obtaining a vector in a direction entering the second cell at the entrance of the second cell to serve as a first vector;
S302. Obtaining a driving vector of the vehicle at the entrance of the second cell to serve as a second vector; and
S303. Calculating an included angle between the first vector and the second vector, and judging whether the vehicle enters the second cell according to the included angle, as shown in Fig. 3.

Preferably, the step S301 includes the following steps:

S311. Selecting a point at the entrance of the second cell to serve as a starting point of the first vector, or directly using the coordinates (2, 1) of the entrance of the second cell as the starting point of the first vector; and

S312. Selecting a point on a ray in the direction entering the second cell to serve as an end point of the first vector, so as to obtain the first vector.

The step S302 includes the following steps:

S321. Obtaining a coordinate point at which the vehicle passes through the entrance of the second cell most recently within the preset time to serve as the starting point of the second vector; and

S222. Starting from the starting point of the second vector, selecting the next driving trajectory point in the historical trajectory of the vehicle to serve as the end point of the second vector, so as to obtain the second vector.

Further, the calculating an included angle between the first vector and the second vector, and judging whether the vehicle enters the second cell according to the included angle includes the following steps:

setting the first vector as (x1, y1), setting the second vector as (x2, y2), setting the included angle between the first vector and the second vector as θ, and calculating θ by the following formula:

$$\cos \theta = \frac{x1x2 + y1y2}{\sqrt{x1^2 + y1^2} + \sqrt{x2^2 + y2^2}}$$

if $0° \leq \theta < 90°$, judging that the vehicle enters the second cell, and that the current location of the vehicle is the second cell; and

if $90° \leq \theta \leq 180°$, judging that the vehicle does not enter the second cell, and that the current location of the vehicle is not in the first cell or the second cell.

As shown in Fig. 3, when the traveling trajectory of the vehicle is the vector 1, the included angle θ of which with the vector in the direction entering the second cell is less than 90°, and it can be judged that the vehicle enters the second cell; and the traveling trajectory of the vehicle is the vector 2, and the included angle θ of which with the vector in the direction entering the second cell is greater than 90°, it can be judged that the vehicle leaves the cell.

The location of the vehicle is obtained again, the preset distance value and the preset time value are adjusted, and the steps S1-S3 are repeated to perform location judgment, until the current location of the vehicle is determined.

According to the method described in the embodiment of the present invention, accurate vehicle location information is obtained through the historical driving trajectory information and the current POI information of the vehicle to identify the specific location where the vehicle is located more accurately; in the case of adjacent POIs, compared with the manner in the prior art that the POI information of the vehicle is judged by directly using the current GPS data, the POI information to which the vehicle belongs can be judged more accurately, without being disturbed by multiple adjacent POIs and other information, the problem that the POI boundary is difficult to judge is solved, and the positioning accuracy is high; and in addition, the location of the vehicle is judged in the method by calculating the included angle between the vectors in the driving direction of the vehicle and the direction entering the first candidate area, the calculation amount is relatively small, and the result can be quickly calculated and inferred, the calculation mode is simple, convenient and feasible, and the efficiency is high.

The embodiment of the present invention further provides a vehicle positioning device. As shown in Fig. 4, the device includes:

a first area selection module 1, configured to obtain current location coordinates of a vehicle, and select candidate areas within a preset distance according to the current location coordinates of the vehicle; and the preset distance can be set according to the traffic conditions, the geographic environment and other information of the area where the vehicle is located.

A second area selection module 2, configured to obtain historical GPS coordinates of the vehicle within a preset time, and select a first candidate area from the candidate areas according to the historical GPS coordinates of the vehicle; and the preset time can be set according to specific traffic conditions, the geographic environment, the average driving speed of the vehicle in the candidate areas and other information.

A judging module 3, configured to judge whether the vehicle enters the first candidate area to determine the current location of the vehicle. If the vehicle enters the first candidate area, the vehicle is currently in the first candidate area, if the vehicle does not enter the first candidate area, the vehicle is not in the first candidate area, the location of the vehicle is obtained again, the preset distance value and the preset time value are adjusted, and the steps S1-S3 are repeated to perform location judgment, until the current location of the vehicle is determined.

The problem of unclear location of the vehicle is descried in the following embodiments in specific scenarios:

As shown in Fig. 2, in the case of two adjacent cells, the two cells are respectively set as a first cell and a second cell, the current coordinate location submitted by the vehicle appears on an adjacent side of the two cells after being drawn on the map, and at this time, the POI information of the vehicle is difficult to judge. In this case, the location of the vehicle has the following two possibilities:

1. Located in the first cell; and

2. Located in the second cell.

For this kind of scenario, the historical trajectory of the vehicle is obtained via the characteristic that the vehicle periodically uploads the currently located GPS location during the driving process, so as to judge the accurate location of the vehicle.

In this scenario, the first area selection module 1 selects the first cell and the second cell as the candidate areas within the preset distance.

The second area selection module 2 selects the preset time, wherein the preset time can be selected as 1 hour in this scenario, obtains the historical GPS coordinates of the vehicle within 1 hour, and selects the first candidate area from the first cell and the second cell according to the historical GPS coordinates of the vehicle.

The second area selection module 2 includes:

a first coordinate obtaining unit, configured to obtain the GPS coordinates of all entrances of the first cell and the second cell;
a coordinate comparison unit, configured to compare the historical GPS coordinates of the vehicle with the GPS coordinates of all entrances of the first cell and the second cell in a reverse chronological manner; and
a first candidate area selection unit, configured to select the candidate area corresponding to the entrance of the candidate area that the vehicle passes through most recently as the first candidate area according to the comparison result.

Specifically, assuming that the first cell has two entrances, and the corresponding GPS coordinates are: (1, 1) and (1,2); the second cell has one entrance, and the corresponding GPS coordinates are (2, 1). It should be noted that the scenario is only used as a specific embodiment to illustrate the present invention, the number of the candidate areas is not limited to two, but can also be multiple, and similarly, the number of the entrances of the candidate areas is not unique, which is analyzed according to the specific scenario.

By searching for the historical driving trajectory of the vehicle, it can be seen that the vehicle passes through (2, 1) half an hour ago, passes through (1, 1) one hour ago, and does not pass through the coordinates of the entrances of other cells thereafter. Then, it can be seen that the entrance point of the cell that the vehicle passes through most recently is (2, 1), and then, the first candidate area selection unit selects the second cell as the first candidate area.

There may also be a special situation in this scenario: if the distance between the entrances of the first cell and the second cell is very small, and the coordinate point of the entrance of the cell that the vehicle passes through most recently is just located between the entrance of the first cell and the entrance of the second cell, then the first candidate area selection unit needs to perform the following judgement: calculating the distances between three coordinate points, that is, when the vehicle passes the space between the entrance of the first cell and the entrance of the second cell, a previous time point and a subsequent time point, with the entrance of the first cell and the entrance of the second cell, comparing the distances, and selecting the cell with the minimum distance as the first candidate area.

The judging module 3 includes:

a first vector obtaining unit, configured to obtain a vector in a direction entering the second cell at the entrance of the second cell to serve as a first vector;
a second vector obtaining unit, configured to obtain a driving vector of the vehicle at the entrance of the second cell to serve as a second vector; and
a judging unit, configured to calculate an included angle between the first vector and the second vector, and judging whether the vehicle enters the second cell according to the included angle, as shown in Fig. 3.

Preferably, the first vector obtaining unit is further configured to:

select a point at the entrance of the second cell to serve as a starting point of the first vector, or directly use the coordinates (2, 1) of the entrance of the second cell as the starting point of the first vector; and
select a point on a ray in the direction entering the second cell to serve as an end point of the first vector, so as to obtain the first vector.

The second vector obtaining unit is further configured to:

obtain a coordinate point at which the vehicle passes through the entrance of the second cell most recently within the preset time to serve as the starting point of the second vector; and
starting from the starting point of the second vector, select the next driving trajectory point in the historical trajectory of the vehicle to serve as the end point of the second vector, so as to obtain the second vector.

The judging unit includes:

a calculation sub-unit, configured to calculate the included angle $\theta$ between the first vector and the second vector,
set the first vector as (x1, y1), set the second vector as (x2, y2), set the included angle between the first vector and the second vector as $\theta$, and specifically calculate $\theta$ by the following formula:

$$\cos\theta = \frac{x1x2 + y1y2}{\sqrt{x1^2 + y1^2} + \sqrt{x2^2 + y2^2}}$$

a judging sub-unit, configured to judge whether the vehicle enters the first candidate area according to the included angle, specifically:

if $0° \leq \theta < 90°$, judge that the vehicle enters the second cell, and that the current location of the vehicle is the second cell; and

if $90° \leq \theta \leq 180°$, judge that the vehicle does not enter the second cell, and that the current location of the vehicle is not in the first cell or the second cell.

As shown in Fig. 3, when the traveling trajectory of the vehicle is the vector 1, the included angle θ of which with the vector in the direction entering the second cell is less than 90°, and the judging sub-unit judges that the vehicle enters the second cell; and the traveling trajectory of the vehicle is the vector 2, and the included angle θ of which with the vector in the direction entering the second cell is greater than 90°, and the judging sub-unit judges that the vehicle leaves the cell.

The first area selection module 1 obtains the location of the vehicle again, adjusts the preset distance value and the preset time value, and performs location judgment again by using the device, until the current location of the vehicle is determined.

According to the device described in the embodiment of the present invention, accurate vehicle location information is obtained through the historical driving trajectory information and the current POI information of the vehicle to identify the specific location where the vehicle is located more accurately; in the case of adjacent POIs, compared with the manner in the prior art that the POI information of the vehicle is judged by directly using the current GPS data, the POI information to which the vehicle belongs can be judged more accurately, without being disturbed by multiple adjacent POIs and other information, the problem that the POI boundary is difficult to judge is solved, and the positioning accuracy is high; and in addition, the location of the vehicle is judged in the method by calculating the included angle between the vectors in the driving direction of the vehicle and the direction entering the first candidate area, the calculation amount is relatively small, and the result can be quickly calculated and inferred, the calculation mode is simple, convenient and feasible, and the efficiency is high.

The embodiment of the present invention further provides a controller, including a memory and a processor, wherein the memory stores a computer program, and the program is configured to implement the steps of the method when executed by the processor.

The embodiment of the present invention further provides a computer-readable storage medium for storing a computer instruction, wherein the instruction implements the steps of the method when executed by a computer or a processor.

The above descriptions are only the preferred embodiments of the present invention, and do not limit the present invention in any form. Although the present invention has been disclosed in the preferred embodiments as above, the preferred embodiments are not used for limiting the present invention, anyone skilled familiar with this art can make some changes or modifications by using the technical contents disclosed above to serve as equivalent embodiments of equivalent changes, without departing from the scope of the technical solutions of the present invention as defined in the appended claims, and any simple modifications, equivalent changes and modifications made to the above embodiments according to the technical essence of the present invention as defined in the appended claims, without departing from the contents of the technical solutions of the present invention, still fall within the scope of the technical solutions of the present invention as defined in the appended claims.

**Claims**

1. A vehicle positioning method, comprising the following steps:

   obtaining current location coordinates of a vehicle, and selecting candidate areas within a preset distance according to the current location coordinates of the vehicle (S1);
   obtaining historical location coordinates of the vehicle within a preset time, and selecting a first candidate area from the candidate areas according to the historical location coordinates of the vehicle (S2); and
   judging whether the vehicle enters the first candidate area to determine the current location of the vehicle (S3),
   **characterized in that**,
   judging whether the vehicle enters the first candidate area (S3) comprises:

   obtaining a vector in a direction entering the first candidate area at an entrance of the first candidate area to serve as a first vector;
   obtaining a driving vector of the vehicle at the entrance of the first candidate area to serve as a second vector, comprising obtaining a coordinate point at which the vehicle passes through the entrance of the first candidate area within the preset time to serve as the starting point of the second vector; and starting from the starting point of the second vector, selecting the next driving trajectory point in the historical trajectory of the vehicle to serve as the end point of the second vector, so as to obtain the second vector; and
   calculating an included angle between the first vector and the second vector, and judging whether the vehicle enters the first candidate area according to the included angle.

2. The vehicle positioning method according to claim 1, wherein the selecting a first candidate area from the candidate areas according to the historical location coordinates of the vehicle (S2) comprises the following steps:

obtaining the location coordinates of the entrances of the candidate areas;
comparing the historical location coordinates of the vehicle with the location coordinates of the entrances of the candidate areas in a reverse chronological manner; and
selecting the candidate area corresponding to the entrance of the candidate area that the vehicle passes through most recently as the first candidate area according to the comparison result.

3. The vehicle positioning method according to claim 2, wherein:
if there are more than two entrances of the candidate areas that the vehicle pass through most recently, the following step is performed to select the first candidate area:
calculating the distances between three coordinate points, that is, when the vehicle passes the entrance of the candidate area, a previous time point and a subsequent time point, and the entrance of each candidate area that the vehicle passes through most recently, comparing the distances, and selecting the candidate area with the minimum distance as the first candidate area.

4. The vehicle positioning method according to claim 1, wherein:
the obtaining a vector in a direction entering the first candidate area at the entrance of the first candidate area to serve as a first vector comprises the following steps:

selecting a point at the entrance of the first candidate area to serve as a starting point of the first vector; and
selecting a point on a ray in the direction entering the first candidate area to serve as an end point of the first vector, so as to obtain the first vector.

5. The vehicle positioning method according to claim 1, wherein:
the calculating an included angle between the first vector and the second vector, and judging whether the vehicle enters the first candidate area according to the included angle comprises the following steps:

setting the first vector as (x1, y1), setting the second vector as (x2, y2), setting the included angle between the first vector and the second vector as θ, and calculating θ by the following formula:

$$\cos\theta = \frac{x1x2 + y1y2}{\sqrt{x1^2 + y1^2} + \sqrt{x2^2 + y2^2}}$$

if $0° \leq \theta < 90°$, judging that the vehicle enters the first candidate area, and that the current location of the vehicle is the first candidate area; and
if $90° \leq \theta \leq 180°$, judging that the vehicle does not enter the first candidate area, and that the current location of the vehicle is not in the candidate area within the selected preset distance.

6. A vehicle positioning device, comprising:

a first area selection module (1), configured to obtain current location coordinates of a vehicle, and select candidate areas within a preset distance according to the current location coordinates of the vehicle (S1);
a second area selection module (2), configured to obtain historical location coordinates of the vehicle within a preset time, and select a first candidate area from the candidate areas according to the historical location coordinates of the vehicle (S2); and
a judging module (3), configured to judge whether the vehicle enters the first candidate area to determine the current location of the vehicle (S3),
**characterized in that**,
the judging module (3) comprises:

a first vector obtaining unit, configured to obtain a vector in a direction entering the first candidate area at an entrance of the first candidate area to serve as a first vector;
a second vector obtaining unit, configured to obtain a driving vector of the vehicle at the entrance of the first candidate area to serve as a second vector, wherein

the second vector obtaining unit is further configured to:
obtain a coordinate point at which the vehicle passes through the entrance of the first candidate area within the preset time to serve as the starting point of the second vector; and starting from the starting point of the second vector, select the next driving trajectory point in the historical trajectory of the vehicle to serve as the end point of the second vector, so as to obtain the second vector; and

a judging unit, configured to calculate an included angle between the first vector and the second vector, and judge whether the vehicle enters the first candidate area according to the included angle.

7. The vehicle positioning device according to claim 6, wherein:
the second area selection module (2) comprises:

a first coordinate obtaining unit, configured to obtain the location coordinates of the entrances of the candidate areas;
a coordinate comparison unit, configured to compare the historical location coordinates of the vehicle with the location coordinates of the entrances of the candidate areas in a reverse chronological manner; and
a first candidate area selection unit, configured to select the candidate area corresponding to the entrance of the candidate area that the vehicle passes through most recently as the first candidate area according to the comparison result.

8. The vehicle positioning device according to claim 7, wherein if there are more than two entrances of the candidate areas that the vehicle pass through most recently, the first candidate area selection unit is further configured to:
calculate the distances between three coordinate points, that is, when the vehicle passes through the entrance of the candidate area, a previous time point and a subsequent time point, and the entrance of each candidate area that the vehicle passes through most recently, compare the distances, and select the candidate area with the minimum distance as the first candidate area.

9. The vehicle positioning device according to claim 6, wherein the first vector obtaining unit is further configured to:

select a point at the entrance of the first candidate area to serve as a starting point of the first vector; and
select a point on a ray in the direction entering the first candidate area to serve as an end point of the first vector, so as to obtain the first vector.

10. The vehicle positioning device according to claim 6, wherein the judging unit comprises:

a calculation sub-unit, configured to calculate the included angle $\theta$ between the first vector and the second vector,
set the first vector as (x1, y1), set the second vector as (x2, y2), set the included angle between the first vector and the second vector as $\theta$, and specifically calculate $\theta$ by the following formula:

$$\cos\theta = \frac{x1x2 + y1y2}{\sqrt{x1^2 + y1^2} + \sqrt{x2^2 + y2^2}}$$

a judging sub-unit, configured to judge whether the vehicle enters the first candidate area according to the included angle, specifically:

if $0° \leq \theta < 90°$, judge that the vehicle enters the first candidate area, and that the current location of the vehicle is the first candidate area; and
if $90° \leq \theta \leq 180°$, judge that the vehicle does not enter the first candidate area, and that the current location of the vehicle is not in the candidate area within the selected preset distance.

11. A controller, comprising a memory and a processor, wherein the memory stores a computer program, and the program is configured to implement the steps of the method according to any of claims 1-5 when executed by the processor.

**Patentansprüche**

1. Fahrzeugpositionsbestimmungsverfahren, das die folgenden Schritte umfasst:

Erhalten aktueller Ortskoordinaten eines Fahrzeugs und Auswählen von Kandidatenbereichen innerhalb einer im Voraus festgelegten Entfernung in Übereinstimmung mit den aktuellen Ortskoordinaten des Fahrzeugs (S1);
Erhalten historischer Ortskoordinaten des Fahrzeugs innerhalb einer im Voraus festgelegten Zeitdauer und Auswählen eines ersten Kandidatenbereichs aus den Kandidatenbereichen in Übereinstimmung mit den historischen Ortskoordinaten des Fahrzeugs (S2); und
Beurteilen, ob das Fahrzeug in den ersten Kandidatenbereich hineinfährt, um den aktuellen Ort des Fahrzeugs zu bestimmen (S3),
**dadurch gekennzeichnet, dass**
das Beurteilen, ob das Fahrzeug in den ersten Kandidatenbereich hineinfährt (S3), Folgendes umfasst:

Erhalten eines Vektors in einer Richtung eines Hineinfahrens in den ersten Kandidatenbereich an einem Zugang des ersten Kandidatenbereichs, damit er als ein erster Vektor dient;

Erhalten eines Fahrvektors des Fahrzeugs an dem Zugang des ersten Kandidatenbereichs, damit er als ein zweiter Vektor dient, wobei das Erhalten Folgendes umfasst:

Erhalten eines Koordinatenpunkts, bei dem das Fahrzeug durch den Zugang des ersten Kandidatenbereichs fährt, innerhalb der im Voraus festgelegten Zeitdauer, um als der Anfangspunkt des zweiten Vektors zu dienen; und Auswählen des nächsten Fahrbewegungsbahnpunkts in der historischen Bewegungsbahn des Fahrzeugs beginnend von dem Anfangspunkt des zweiten Vektors, damit er als der Endpunkt des zweiten Vektors dient, um den zweiten Vektor zu erhalten; und Berechnen eines eingeschlossenen Winkels zwischen dem ersten Vektor und dem zweiten Vektor und Beurteilen, ob das Fahrzeug in den ersten Kandidatenbereich hineinfährt, in Übereinstimmung mit dem eingeschlossenen Winkel.

2. Fahrzeugpositionsbestimmungsverfahren nach Anspruch 1, wobei das Auswählen eines ersten Kandidatenbereichs aus den Kandidatenbereichen in Übereinstimmung mit den historischen Ortskoordinaten des Fahrzeugs (S2) die folgenden Schritte umfasst:

Erhalten der Ortskoordinaten der Zugänge der Kandidatenbereiche; Vergleichen der historischen Ortskoordinaten des Fahrzeugs mit den Ortskoordinaten der Zugänge der Kandidatenbereiche in einer umgekehrt chronologischen Art und Weise; und Auswählen des Kandidatenbereichs, der dem Zugang des Kandidatenbereichs, durch den das Fahrzeug zuletzt gefahren ist, entspricht, als den ersten Kandidatenbereich in Übereinstimmung mit dem Vergleichsergebnis.

3. Fahrzeugpositionsbestimmungsverfahren nach Anspruch 2, wobei:
der folgende Schritt ausgeführt wird, um den ersten Kandidatenbereich auszuwählen, falls es mehr als zwei Zugänge der Kandidatenbereiche, durch die das Fahrzeug zuletzt gefahren ist, gibt:
Berechnen der Entfernungen zwischen drei Koordinatenpunkten, d. h., wenn das Fahrzeug durch den Zugang des Kandidatenbereichs fährt, zu einem vorhergehenden Zeitpunkt und zu einem nachfolgenden Zeitpunkt, und dem Zugang eines jeden Kandidatenbereichs, durch den das Fahrzeug zuletzt gefahren ist, Vergleichen der Entfernungen und Auswählen des Kandidatenbereichs mit der minimalen Entfernung als den ersten Kandidatenbereich.

4. Fahrzeugpositionsbestimmungsverfahren nach Anspruch 1, wobei:
das Erhalten eines Vektors in einer Richtung eines Hineinfahrens in den ersten Kandidatenbereich an dem Zugang des ersten Kandidatenbereichs, damit er als ein erster Vektor dient, die folgenden Schritte umfasst:

Auswählen eines Punkts an dem Zugang in den ersten Kandidatenbereich, damit er als ein Anfangspunkt des ersten Vektors dient; und Auswählen eines Punkts auf einem Strahl in der Richtung des Hineinfahrens in den ersten Kandidatenbereich, damit er als ein Endpunkt des ersten Vektors dient, um den ersten Vektor zu erhalten.

5. Fahrzeugpositionsbestimmungsverfahren nach Anspruch 1, wobei:
das Berechnen eines eingeschlossenen Winkels zwischen dem ersten Vektor und dem zweiten Vektor und das Beurteilen, ob das Fahrzeug in den ersten Kandidatenbereich hineinfährt, in Übereinstimmung mit dem eingeschlossenen Winkel die folgenden Schritte umfasst:

Setzen des ersten Vektors als $(x1, y1)$, Setzen des zweiten Vektors als $(x2, y2)$, Setzen des eingeschlossenen Winkels zwischen dem ersten Vektor und dem zweiten Vektor als $\theta$ und Berechnen von $\theta$ durch die folgende Formel:

$$\cos\theta = \frac{x1x2 + y1y2}{\sqrt{x1^2 + y1^2} + \sqrt{x2^2 + y2^2}}$$

falls $0° \leq \theta < 90°$ ist, Feststellen, dass das Fahrzeug in den ersten Kandidatenbereich hineinfährt und dass der aktuelle Ort des Fahrzeugs der erste Kandidatenbereich ist; und falls $90° \leq \theta \leq 180°$ ist, Feststellen, dass das Fahrzeug nicht in den ersten Kandidatenbereich hineinfährt und dass der aktuelle Ort des Fahrzeugs nicht in dem Kandidatenbereich innerhalb der gewählten im Voraus festgelegten Entfernung ist.

6. Fahrzeugpositionsbestimmungsvorrichtung, die Folgendes aufweist:

ein erstes Bereichsauswahlmodul (1), das zum Erhalten aktueller Ortskoordinaten eines Fahrzeugs und zum Auswählen von Kandidatenbereichen innerhalb einer im Voraus festgelegten Entfernung in Übereinstimmung mit den aktuellen Ortskoordinaten des Fahrzeugs (S1) konfiguriert ist;

ein zweites Bereichsauswahlmodul (2), das zum Erhalten historischer Ortskoordinaten des Fahrzeugs innerhalb einer im Voraus festgelegten Zeitdauer und zum Auswählen eines ersten Kandidatenbereichs aus den Kandidatenbereichen in Übereinstimmung mit den historischen Ortskoordinaten des Fahrzeugs (S2) konfiguriert ist; und

ein Beurteilungsmodul (3), das zum Beurteilen, ob das Fahrzeug in den ersten Kandidatenbereich hineinfährt, um den aktuellen Ort des Fahrzeugs zu bestimmen (S3), konfiguriert ist, **dadurch gekennzeichnet, dass**

das Beurteilungsmodul (3) Folgendes aufweist:

eine Einheit zum Erhalten eines ersten Vektors, die zum Erhalten eines Vektors in einer Richtung eines Hineinfahrens in den ersten Kandidatenbereich an einem Zugang des ersten Kandidatenbereichs, damit er als ein erster Vektor dient, konfiguriert ist;

eine Einheit zum Erhalten eines zweiten Vektors, die zum Erhalten eines Fahrvektors des Fahrzeugs an dem Zugang des ersten Kandidatenbereichs, damit er als ein zweiter Vektor dient, konfiguriert ist, wobei die Einheit zum Erhalten eines zweiten Vektors ferner konfiguriert ist zum:

Erhalten eines Koordinatenpunkts, bei dem das Fahrzeug durch den Zugang des ersten Kandidatenbereichs fährt, innerhalb der im Voraus festgelegten Zeitdauer, um als der Anfangspunkt des zweiten Vektors zu dienen; und Auswählen des nächsten Fahrbewegungsbahnpunkts in der historischen Bewegungsbahn des Fahrzeugs beginnend von dem Anfangspunkt des zweiten Vektors, damit er als der Endpunkt des zweiten Vektors dient, um den zweiten Vektor zu erhalten; und eine Beurteilungseinheit, die zum Berechnen eines eingeschlossenen Winkels zwischen dem ersten Vektor und dem zweiten Vektor und zum Beurteilen, ob das Fahrzeug in den ersten Kandidatenbereich hineinfährt, in Übereinstimmung mit dem eingeschlossenen Winkel konfiguriert ist.

7. Fahrzeugpositionsbestimmungsvorrichtung nach Anspruch 6, wobei:
das zweite Bereichsauswahlmodul (2) Folgendes aufweist:

eine erste Einheit zum Erhalten von Koordinaten, die zum Erhalten der Ortskoordinaten der Zugänge der Kandidatenbereiche konfiguriert ist;

eine Koordinatenvergleichseinheit, die zum Vergleichen der historischen Ortskoordinaten des Fahrzeugs mit den Ortskoordinaten der Zugänge der Kandidatenbereiche in einer umgekehrt chronologischen Art und Weise konfiguriert ist; und

eine erste Kandidatenbereichs-Auswahleinheit, die zum Auswählen des Kandidatenbereichs, der dem Zugang des Kandidatenbereichs, durch den das Fahrzeug zuletzt gefahren ist, entspricht, als den ersten Kandidatenbereich in Übereinstimmung mit dem Vergleichsergebnis konfiguriert ist.

8. Fahrzeugpositionsbestimmungsvorrichtung nach Anspruch 7, wobei, falls es mehr als zwei Zugänge der Kandidatenbereiche, durch die das Fahrzeug zuletzt gefahren ist, gibt, die erste Kandidatenbereichs-Auswahleinheit ferner konfiguriert ist zum: Berechnen der Entfernungen zwischen drei Koordinatenpunkten, d. h., wenn das Fahrzeug durch den Zugang des Kandidatenbereichs fährt, zu einem vorhergehenden Zeitpunkt und zu einem nachfolgenden Zeitpunkt, und dem Zugang eines jeden Kandidatenbereichs, durch den das Fahrzeug zuletzt gefahren ist, Vergleichen der Entfernungen und Auswählen des Kandidatenbereichs mit der minimalen Entfernung als den ersten Kandidatenbereich.

9. Fahrzeugpositionsbestimmungsvorrichtung nach Anspruch 6, wobei die Einheit zum Erhalten eines ersten Vektors ferner konfiguriert ist zum:

Auswählen eines Punkts an dem Zugang des ersten Kandidatenbereichs, damit er als ein Anfangspunkt des ersten Vektors dient; und Auswählen eines Punkts auf einem Strahl in der Richtung eines Hineinfahrens in den ersten Kandidatenbereich, damit er als ein Endpunkt des ersten Vektors dient, um den ersten Vektor zu erhalten.

10. Fahrzeugpositionsbestimmungsvorrichtung nach Anspruch 6, wobei die Beurteilungseinheit Folgendes aufweist:

eine Berechnungsuntereinheit, die zum Berechnen des eingeschlossenen Winkels $\theta$ zwischen dem ersten Vektor und dem zweiten Vektor, zum Setzen des ersten Vektors als $(x1, y1)$, zum Setzen des zweiten Vektors als $(x2, y2)$, zum Setzen des eingeschlossenen Winkels zwischen dem ersten Vektor und dem zweiten Vektor als $\theta$ und speziell zum Berechnen von $\theta$ durch

die folgende Formel konfiguriert ist:

$$\cos\theta = \frac{x1x2 + y1y2}{\sqrt{x1^2 + y1^2} + \sqrt{x2^2 + y2^2}},$$

eine Beurteilungsuntereinheit, die zum Beurteilen, ob das Fahrzeug in den ersten Kandidatenbereich hineinfährt, in Übereinstimmung mit dem eingeschlossenen Winkel, speziell:

falls $0° \leq \theta < 90°$ ist, zum Feststellen, dass das Fahrzeug in den ersten Kandidatenbereich hineinfährt und dass der aktuelle Ort des Fahrzeugs der erste Kandidatenbereich ist; und

falls $90° \leq \theta \leq 180°$ ist, zum Feststellen, dass das Fahrzeug nicht in den ersten Kandidatenbereich hineinfährt und dass der aktuelle Ort des Fahrzeugs nicht in dem Kandidatenbereich innerhalb der im Voraus festgelegten Entfernung ist, konfiguriert ist.

**11.** Controller, der einen Speicher und einen Prozessor aufweist, wobei der Speicher ein Computerprogramm speichert und wobei das Programm zum Implementieren der Schritte des Verfahrens nach einem der Ansprüche 1-5, wenn es durch den Prozessor ausgeführt wird, konfiguriert ist.

**Revendications**

**1.** Procédé de positionnement de véhicule, comprenant les étapes suivantes :

L'obtention de coordonnées d'emplacement courant d'un véhicule, et la sélection de zones candidates à l'intérieur d'une distance prédéterminée selon les coordonnées de l'emplacement courant du véhicule (S1) ;

l'obtention de coordonnées d'emplacements historiques du véhicule dans un temps prédéterminé, et la sélection d'une première zone candidate parmi les zones candidates selon les coordonnées des emplacements historiques du véhicule (S2) ; et

l'estimation de si le véhicule pénètre ou pas dans la première zone candidate afin de déterminer l'emplacement courant du véhicule (S3), **caractérisé en ce que**

l'estimation de si le véhicule pénètre ou pas dans la première zone candidate (S3) comprend :

l'obtention d'un vecteur dans une direction de pénétration dans la première zone candidate à une entrée de la première zone candidate pour servir de premier vecteur ;

l'obtention d'un vecteur de conduite du véhicule à l'entrée de la première zone candidate pour servir comme deuxième vecteur, comprenant :

l'obtention d'un point de coordonnées auquel le véhicule passe à travers l'entrée de la première zone candidate dans le temps prédéterminé pour servir comme le point de début du deuxième vecteur ; et à partir de ce point de début du deuxième vecteur, la sélection du point suivant de la trajectoire de conduite dans la trajectoire historique du véhicule pour servir comme le point de fin du deuxième vecteur, afin d'obtenir le deuxième vecteur ; et

le calcul d'un angle inclus entre le premier vecteur et le deuxième vecteur, et l'estimation de si le véhicule pénètre ou pas dans la première zone candidate selon cet angle inclus.

**2.** Procédé de positionnement de véhicule selon la revendication 1, dans lequel la sélection d'une première zone candidate parmi les zones candidates selon les coordonnées des emplacements historiques du véhicule (S2) comprend les étapes suivantes :

l'obtention des coordonnées des emplacements des entrées des zones candidates ;

la comparaison des coordonnées des emplacements historiques du véhicule avec les coordonnées des emplacements des entrées des zones candidates d'une manière chronologique inverse ; et

la sélection de la zone candidate correspondant à l'entrée de la zone candidate à travers laquelle le véhicule est passé le plus récemment comme la première zone candidate selon le résultat de la comparaison.

**3.** Procédé de positionnement de véhicule selon la revendication 2, dans lequel :

s'il y a plus que deux entrées des zones candidates à travers lesquelles le véhicule est passé le plus récemment, l'étape suivante est exécutée pour sélectionner la première zone candidate :

le calcul des distances entre trois points de coordonnées, c'est-à-dire, quand le véhicule passe à travers l'entrée de la zone candidate, un instant antérieur et un instant ultérieur, et l'entrée de chaque zone candidate à travers laquelle le véhicule est passé le plus récemment, la comparaison de ces distances, et la sélection de la zone candidate avec la distance minimum comme la première zone candidate.

**4.** Procédé de positionnement de véhicule selon la revendication 1, dans lequel :
l'obtention d'un vecteur dans une direction de pénétration dans la première zone candidate à l'entrée de la première zone candidate pour servir de premier vecteur comprend les étapes suivantes :

la sélection d'un point à l'entrée de la première zone candidate pour servir comme point de début du premier vecteur ; et
la sélection d'un point sur un rayon dans la direction de pénétration dans la première zone candidate pour servir comme point de fin du premier vecteur, afin d'obtenir le premier vecteur.

**5.** Procédé de positionnement de véhicule selon la revendication 1, dans lequel :
le calcul d'un angle inclus entre le premier vecteur et le deuxième vecteur, et l'estimation de si le véhicule pénètre ou pas dans la première zone candidate selon cet angle inclus comprennent les étapes suivantes :

l'établissement du premier vecteur comme (x1, y1), l'établissement du deuxième vecteur comme (x2, y2), l'établissement de l'angle inclus entre le premier vecteur et le deuxième vecteur comme θ, et le calcul de θ avec la formule suivante :

$$\cos\theta = \frac{x1x2 + y1y2}{\sqrt{x1^2 + y1^2} + \sqrt{x2^2 + y2^2}}$$

si 0° ≤ θ < 90°, l'estimation que le véhicule pénètre dans la première zone candidate et que l'emplacement courant du véhicule est la première zone candidate ; et
si 90° ≤ θ ≤ 180°, l'estimation que le véhicule ne pénètre pas dans la première zone candidate et que l'emplacement courant du véhicule n'est pas dans la zone candidate à l'intérieur de la distance prédéterminée sélectionnée.

**6.** Dispositif de positionnement de véhicule, comprenant :

un premier module de sélection de zone (1), configuré de façon à obtenir des coordonnées d'emplacement courant d'un véhicule, et à sélectionner des zones candidates à l'intérieur d'une distance prédéterminée selon les coordonnées de l'emplacement courant du véhicule (S1) ;
un deuxième module de sélection de zone (2), configuré de façon à obtenir des coordonnées d'emplacements historiques du véhicule dans un temps prédéterminé, et à sélectionner une première zone candidate parmi les zones candidates selon les coordonnées des emplacements historiques du véhicule (S2) ; et
un module d'estimation (3), configuré de façon à estimer si le véhicule pénètre ou pas dans la première zone candidate afin de déterminer l'emplacement courant du véhicule (S3),
**caractérisé en ce que**
ce module d'estimation (3) comprend :

une unité d'obtention de premier vecteur, configurée de façon à obtenir un vecteur dans une direction de pénétration dans la première zone candidate à une entrée de la première zone candidate pour servir de premier vecteur ;
une unité d'obtention de deuxième vecteur, configurée de façon à obtenir un vecteur de conduite du véhicule à l'entrée de la première zone candidate pour servir de deuxième vecteur, cette unité d'obtention de deuxième vecteur étant configurée en outre de façon à :

obtenir un point de coordonnées auquel le véhicule passe à travers l'entrée de la première zone candidate dans le temps prédéterminé pour servir comme le point de début du deuxième vecteur ; et à partir de ce point de début du deuxième vecteur, sélectionner le point suivant de la trajectoire de conduite dans la trajectoire historique du véhicule pour servir comme le point de fin du deuxième vecteur, afin d'obtenir le deuxième vecteur ; et
une unité d'estimation, configurée de façon à calculer un angle inclus entre le premier vecteur et le deuxième vecteur, et à estimer si le véhicule pénètre ou pas dans la première zone candidate selon cet angle inclus.

**7.** Dispositif de positionnement de véhicule selon la revendication 6, dans lequel :
le deuxième module de sélection de zone (2) comprend :

une première unité d'obtention de coordonnées, configurée de façon à obtenir les coordonnées des emplacements des entrées des zones candidates ;
une unité de comparaison des coordonnées, configurée de façon à comparer les coordonnées des emplacements historiques du véhicule avec les coordonnées des emplacements des entrées des zones candidates d'une manière chronologique inverse ; et
une unité de sélection de première zone candidate, configurée de façon à sélectionner la zone candidate correspondant à l'entrée de la zone candidate à travers laquelle le véhicule est passé le plus récemment comme la première zone candidate selon le résultat de la comparaison.

8. Dispositif de positionnement de véhicule selon la revendication 7, dans lequel, s'il y a plus que deux entrées des zones candidates à travers lesquelles le véhicule est passé le plus récemment, l'unité de sélection de la première zone candidate est configurée en outre de façon à :
calculer les distances entre trois points de coordonnées, c'est-à-dire, quand le véhicule passe à travers l'entrée de la zone candidate, un instant antérieur et un instant ultérieur, et l'entrée de chaque zone candidate à travers laquelle le véhicule est passé le plus récemment, comparer ces distances, et sélectionner la zone candidate avec la distance minimum comme la première zone candidate.

9. Dispositif de positionnement de véhicule selon la revendication 6, dans lequel l'unité d'obtention du premier vecteur est configurée en outre de façon à :

sélectionner un point à l'entrée de la première zone candidate pour servir comme point de début du premier vecteur ; et à
sélectionner un point sur un rayon dans la direction de pénétration dans la première zone candidate pour servir comme point de fin du premier vecteur, afin d'obtenir le premier vecteur.

10. Dispositif de positionnement de véhicule selon la revendication 6, dans lequel l'unité d'estimation comprend :

une sous-unité de calcul, configurée de façon à calculer l'angle inclus $\theta$ entre le premier vecteur et le deuxième vecteur, et à
établir le premier vecteur comme $(x1, y1)$, établir le deuxième vecteur comme $(x2, y2)$, établir l'angle inclus entre le premier vecteur et le deuxième vecteur comme $\theta$, et calculer spécifiquement $\theta$ avec la formule suivante :

$$\cos\theta = \frac{x1x2 + y1y2}{\sqrt{x1^2 + y1^2} + \sqrt{x2^2 + y2^2}}$$

une sous-unité d'estimation, configurée de façon à estimer si le véhicule pénètre ou pas dans la première zone candidate selon l'angle inclus, spécifiquement :

si $0° \leq \theta < 90°$, estimer que le véhicule pénètre dans la première zone candidate et que l'emplacement courant du véhicule est la première zone candidate ; et
si $90° \leq \theta \leq 180°$, estimer que le véhicule ne pénètre pas dans la première zone candidate et que l'emplacement courant du véhicule n'est pas dans la première zone candidate à l'intérieur de la distance prédéterminée sélectionnée.

11. Contrôleur, comprenant une mémoire et un processeur, cette mémoire stockant un programme informatique, et ce programme étant configuré de façon à exécuter les étapes du procédé selon l'une quelconque des revendications 1 à 5 lorsqu'il est exécuté par le processeur.

obtaining current location coordinates of a vehicle, and selecting candidate areas within a preset distance according to the current location coordinates of the vehicle — S1

obtaining historical location coordinates of the vehicle within a preset time, and selecting a first candidate area from the candidate areas according to the historical location coordinates of the vehicle — S2

judging whether the vehicle enters the first candidate area to determine the current location of the vehicle — S3

**Fig. 1**

| First cell | | Second cell |
| --- | --- | --- |
| | ● | |
| Current GSP location of the vehicle | | |

Map

**Fig. 2**

Interior of the cell

Vector entering the cell

Travelling trajectory
vector 1 of the vehicle

θ

θ

Travelling trajectory
vector 2 of the vehicle

**Fig. 3**

First area selection
module ⟋ 1

Second area selection
module ⟋ 2

Judging module ⟋ 3

**Fig. 4**

**EP 3 699 642 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100141432 A1